# EUROPEAN PATENT APPLICATION

(11) **EP 3 506 178 A1**
(43) Date of publication of application: **03.07.2019**
(21) Application number: 18213623.4
(22) Date of filing: 18.12.2018
(51) Int. Cl.: G06Q 10/06

(54) **TASK SUPPORT SYSTEM AND TASK SUPPORT METHOD**

(30) Priority: 27.12.2017 JP 2017251197
(71) Applicant: TOYOTA JIDOSHA KABUSHIKI KAISHA, Toyota-shi, Aichi 471 8571 (JP)
(72) Inventor: MUTA, Takahiro, Toyota-shi,, Aichi 471-8571 (JP); ANDO, Eisuke, Toyota-shi,, Aichi 471-8571 (JP); HISHIKAWA, Takao, Toyota-shi,, Aichi 471-8571 (JP)
(74) Representative: J A Kemp

(57) **Abstract**

A task support system configured to support task performance of a user using an information processing apparatus (150) installed in a vehicle (100) includes a server (500). The server (500) includes a task management database storing identification information and remaining task information in association with each other. The server (500) is configured to calculate a needed time for the vehicle (100) to reach a predetermined destination set in association with the user, acquire the remaining task information associated with the user from the task management database, based on the identification information, when the user gets on the vehicle (100), extract a predetermined task predicted to be completed by the user through the information processing apparatus (150) within the needed time, from among remaining tasks included in the remaining task information, and present the extracted predetermined task to a predetermined apparatus accessible by the user.

## Description

### BACKGROUND OF THE INVENTION

### 1. Field of the Invention

The invention relates to a system and a method for supporting task performance of a user using an information processing apparatus, in a vehicle provided with the information processing apparatus.

### 2. Description of Related Art

Generally, a vehicle is used for a user to move to a desired destination, or to transport a package to a desired delivery destination. A form of using the space in the vehicle as a space for a user to perform a predetermined task is also considered. For example, Japanese Unexamined Patent Application Publication No. 9-183334 (JP 9-183334 A) discloses a mobile office configured by disposing office equipment in a vehicle so as to be usable and connecting a plurality of the vehicles. The vehicles are connected to a connection vehicle for connecting the vehicles, so that traveling between vehicles becomes possible through the connection vehicle, and an office space of a size as needed is provided. Furthermore, a vehicle, in which at least one of a power generation device, an air conditioning device, a bathroom, a toilet, and kitchen equipment is disposed, is connected to the connection vehicle, so the comfortability of the office is improved. The mobile office of JP 9-183334 A is configured by gathering a plurality of vehicles and a connection vehicle at a predetermined place and connecting them to each other.

### SUMMARY OF THE INVENTION

Generally, a user performs a user's task at a predetermined place (for example, an office normally used, or an office temporarily used on a business trip or the like). Even when the place where the user performs a task varies without being determined to a specific place, some place is needed for the user to perform a task. In some cases, the user is desirable to move from the predetermined place by a vehicle when performing the user's task at the predetermined place as described above. For example, the user has a meeting with another person at a place other than the predetermined place, or the user returns home from the predetermined place.

In the case of a movement by a vehicle as described above, since the above-described moving time is limited, it is not easy to efficiently perform a task even when the task is attempted in the vehicle. The internal space of the vehicle by which the user moves is different from the space in which an ordinary task is performed, so it is not easy to perform a task in the same way. As described above, from the viewpoint of task performance of the user, the user is not in a situation where the above-described moving time is effectively used when moving by the vehicle.

The present invention provides a task support system and a task support method for efficiently using the above-described moving time for task performance of the user even when the user moves by a vehicle.

In the task support system of the invention, a process of extracting a remaining task of the user that can be performed within a needed time until the user reaches a desired destination when moving by a vehicle and proposing the extracted task to the user is performed. By the process as described above, the user is able to understand the remaining task of the user that can be finished even while moving by a vehicle in a limited time, and as a result, accomplish efficient task performance.

A first aspect of the invention relates to a task support system configured to support task performance of a user using an information processing apparatus installed in a vehicle. The task support system includes a server including a task management database storing identification information for identifying the user and remaining task information on remaining tasks of the user in association with each other. The server is configured to calculate a needed time for the vehicle to reach a predetermined destination set in association with the user, acquire the remaining task information associated with the user from the task management database, based on the identification information for identifying the user, when the user gets on the vehicle, extract a predetermined task predicted to be completed by the user through the information processing apparatus within the needed time, from among remaining tasks included in the remaining task information, and present the predetermined task extracted by the server to a predetermined apparatus accessible by the user.

The task support system is a system for supporting task performance of a user, when the user performs a task of the user while moving by the vehicle, by using an information processing apparatus provided in the vehicle. The information processing apparatus may be scheduled to be used by the user who gets on the vehicle, may be fixedly disposed on the structure of the vehicle, and may be disposed so as to be freely movable by the user inside the vehicle. The information processing apparatus also includes an interface device needed for task performance of the user. In addition, "task" includes a matter that the user personally wants to perform, a matter that the user has been requested to perform by another person, and the like, as well as a task that is needed to be performed by the user in a workplace such as a company. That is, the task is recognized by the user as a matter to be performed, and there is no particular restriction on the reason for performing the task, the background, and the like.

Here, in the task support system, the needed time is calculated by the server. The needed time is the time until the vehicle that the user gets on reaches a predetermined destination set in association with the user. The "predetermined destination" referred to here is a place where a user, supposed to perform a task in the vehicle, is to get off the vehicle and is not able to perform the task in the vehicle any more. Therefore, in a case where the user intends to move by a vehicle to a final destination through one or a plurality of way points on the way, when the user continuously gets on the vehicle substantially to the final destination even when the user temporarily gets off the vehicle at the way point, the final destination may be a predetermined destination. On the other hand, the way point may also be a predetermined destination when a time during which the user gets off the vehicle is relatively long, and the continuity of task performance is hindered. Then, in order to calculate a needed time, the server may use information on a distance from the vehicle to the predetermined destination and a traffic situation (presence or absence of congestion, an average running speed, or the like) on the route along which the vehicle travels to the destination.

Further, regarding the user getting on the vehicle, the server acquires information on a remaining task that has not been completed when the user gets on the vehicle (hereinafter, simply referred to as "remaining task information"), from the task management database. The remaining task referred to here is a task that has not yet been completed when the user gets on the vehicle, and indicates the task to be completed by the user. The task management database does not necessarily need to be included as a constituent element in the task support system and may be appropriately constructed inside or outside the task support system according to a purpose. For example, the task management database may be constructed such that the user manages the user's task progress or the like by a system different from the task support system, and in this case, the server acquires remaining task information from the task management database constructed outside the task support system.

The server extracts the remaining task that the user is able to complete through the information processing apparatus within the calculated needed time, as the predetermined task, based on the acquired remaining task information. That is, the server extracts a remaining task that is able to be completed in the moving vehicle before the user moves to a predetermined destination by the vehicle. For the purpose of the extraction, although not particularly limited, the remaining task information desirably includes various types of information on the remaining task, such as the processing time and the load amount assumed for the completion of the remaining task, the availability of the information processing apparatus provided in the vehicle. Alternatively, the server may calculate the processing time needed for the completion of the remaining task based on the history of the task contents completed by the user in the past, and may extract the predetermined task based on the above-described calculation result. One or a plurality of predetermined tasks may be extracted. The predetermined task extracted as described above is proposed to the user through a predetermined apparatus accessible by the user.

The first aspect of the invention enables the user to be able to complete a remaining task that is designated as a predetermined task with a high probability within a limited moving time (needed time) in a vehicle. Thus, since the task performance is not interrupted, it is possible to efficiently perform the remaining task.

In the task support system according to the first aspect of the invention, the server may be configured to obtain a signal indicating whether or not the user accepts the predetermined task presented by the server from the predetermined apparatus. The server may be configured to control the information processing apparatus so as to be in a task-possible state in which the user is permitted to access task information needed for the predetermined task through the information processing apparatus, when the user accepts the predetermined task. As described above, when the server is configured to control the information processing apparatus so as to be in a task-possible state by the server, when the user gets on the vehicle, the user is able to promptly perform the predetermined task by using the information processing apparatus. The above described fact contributes to the efficient use of the limited moving time (needed time) in a vehicle.

In the task support system according to the first aspect of the invention, the server may be configured to present information on the predetermined task to the predetermined apparatus that is different from the information processing apparatus and is located in a location other than the vehicle. The server may be configured to control the information processing apparatus so as to be in the task-possible state before the user gets on the vehicle, when the user accepts the predetermined task through the predetermined apparatus. According to the first aspect of the invention, the information processing apparatus is controlled so as to make a proposal related to a predetermined task to a user before the user gets on the vehicle, and when the user accepts the proposal, the information processing apparatus is controlled so as to be in a task-possible state before the user gets on the vehicle, so it is possible to promote the user to perform the predetermined task. In the task support system according to the first aspect of the invention, the server may be configured to present information on the predetermined task to the information processing apparatus that is the predetermined apparatus. The server may be configured to control the information processing apparatus so as to be in the task-possible state, when the user accepts the predetermined task through the information processing apparatus. According to the first aspect of the invention, a user who gets in a vehicle can accept the proposal and perform the predetermined task through the information processing apparatus provided in the vehicle.

In the task support system according to the first aspect of the invention, the remaining task information may include information on a plurality of sub-tasks into which the remaining task is divided. The server may be configured to extract, as the predetermined task, one of the sub-tasks that is predicted to be completed by the user through the information processing apparatus within the needed time. The server may be configured to present the remaining task including the one of the sub-tasks as the predetermined task, to the predetermined apparatus accessible by the user. For example, when the remaining task can be divided along the time flow of the execution of the remaining task, the sub-task corresponds to each element of the divided remaining task. The division of the remaining task into sub-tasks can be done appropriately from the user's point of view, such as that there is no trouble even when the flow of task is temporarily blocked. As described above, since the proposal is made by the server after the remaining task is divided into sub-tasks, the user can more efficiently use the limited moving time (needed time) in the vehicle for task performance of the user.

In the task support system according to the first aspect of the invention, the remaining task information may include information on the priority of the remaining task. The server may be configured to, when there is a plurality of the remaining tasks predicted to be completed by the user through the information processing apparatus within the needed time, extract the predetermined task based on priorities related to the remaining tasks. According to the first aspect of the invention, it is possible to promptly process a process with a high priority by the user by using the limited moving time (needed time) in the vehicle.

In the task support system according to the first aspect of the invention, the server may be configured to record predetermined information related to a task situation formed in the information processing apparatus with respect to the predetermined task, in a case where the predetermined task is not completed when the vehicle reaches the predetermined destination. The predetermined information may be information determined to reproduce a situation identical to the task situation formed in the information processing apparatus by being applied to another information processing apparatus associated with the predetermined destination and accessible by the user.

Even when the user accepts a predetermined task and proceeds to perform the predetermined task, for some reasons (for example, because the vehicle reaches a predetermined destination earlier than the calculated needed time, or the task performance speed of the user is slow), it may not be possible to complete the predetermined task before the vehicle reaches the predetermined destination. In the case as described above, an information retaining unit retains predetermined information related to the task situation at the time when the vehicle reaches the predetermined destination or the vicinity of the destination, that is, "incomplete situation concerning the predetermined task". The predetermined information relates to processing progress of the predetermined task in the information processing apparatus, assuming that the predetermined task is performed using the information processing apparatus provided in the vehicle. Therefore, when the information retaining unit retains the predetermined information, the user, who reaches the predetermined destination and gets off the vehicle, is able to access the retained predetermined information through another information processing apparatus, reform the task situation of the predetermined task which is in the incomplete situation by another information processing apparatus, and perform the predetermined task continuously.

In the task support system according to the first aspect of the invention, the vehicle may be an autonomous moving vehicle that is connected to the server through wireless communication and is configured to autonomously move to the predetermined destination, without manipulation by the user, in response to a moving command for the predetermined destination, the moving command being issued from the server. When the user moves by the autonomously moving vehicle, even when the user alone gets on the vehicle, the user does not need to drive the vehicle, and the moving time can be spent on the task performance of the user. Therefore, the proposal process of the predetermined task by the above-described server becomes more useful.

The task support system according to the first aspect of the invention may be configured with one or a plurality of processing apparatuses such as computers. When the task support system is configured with a plurality of processing apparatuses, respective constituent elements of the task support system are distributedly provided in the processing apparatuses, and each of processing apparatuses cooperates with each other to realize the process as a task support system. The task support system according to the first aspect of the invention may be formed in the vehicle, or may be formed outside the vehicle.

A second aspect of the invention relates to a task support method for supporting task performance of a user using an information processing apparatus installed in a vehicle, by using a server. The task support method includes: by the server, storing identification information for identifying the user and remaining task information on remaining tasks to be completed by the user in association with each other in a task management database of the server; by the server, calculating a needed time for the vehicle to reach a predetermined destination set in association with the user; by the server, acquiring the remaining task information associated with the user, from the task management database, based on the identification information of the user, when the user gets on the vehicle; by the server, extracting a predetermined task predicted to be completed by the user through the information processing apparatus within the needed time, from among the remaining tasks included in the remaining task information associated with the user; and by the server, presenting the predetermined task extracted by the server to a predetermined apparatus accessible by the user. The technical idea disclosed in connection with the task support system described above can also be applied to the task support method as long as there is no technical inconsistency.

The task support method according to the second aspect may further include, by the server, obtaining a signal indicating whether or not the user accepts the predetermined task presented by the server from the predetermined apparatus, and by the server, controlling the information processing apparatus so as to be in a task-possible state in which the user is permitted to access task information needed for the predetermined task through the information processing apparatus, when the user accepts the predetermined task.

According to the aspects of the invention, even when the user moves by a vehicle, the above-described moving time can be efficiently used for task performance of the user.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing a schematic configuration of a mobile system to which a task support system of the invention is applied;
FIG. 2 is a block diagram showing a schematic configuration of a user terminal, a center server, a task management server, and a vehicle, shown in FIG. 1;
FIG. 3 is a table showing a data structure of vehicle management information stored in the center server;
FIG. 4 is a sequence showing the flow of a process in the mobile system;
FIG. 5 is a diagram showing a travel route when a vehicle travels from a departure to a destination;
FIG. 6A is a table showing a data structure of task management information stored in the task management server;
FIG. 6B is a table showing a data structure of sub-task information stored in the task management server;
FIG. 7 is a flowchart of task support control performed by the center server;
FIG. 8 is a sequence showing the flow of a process between the user terminal, the center server, the task management server, and the vehicle when the task support control of FIG. 7 is performed; and
FIG. 9 is a flowchart of another task support control performed by the center server.

### DETAILED DESCRIPTION OF EMBODIMENTS

Specific embodiments will be described below with reference to the drawings. The configuration described in the embodiments does not limit the technical scope of the invention to the above-described purpose only, even when it is not specifically described.

### First Embodiment

### System Overview

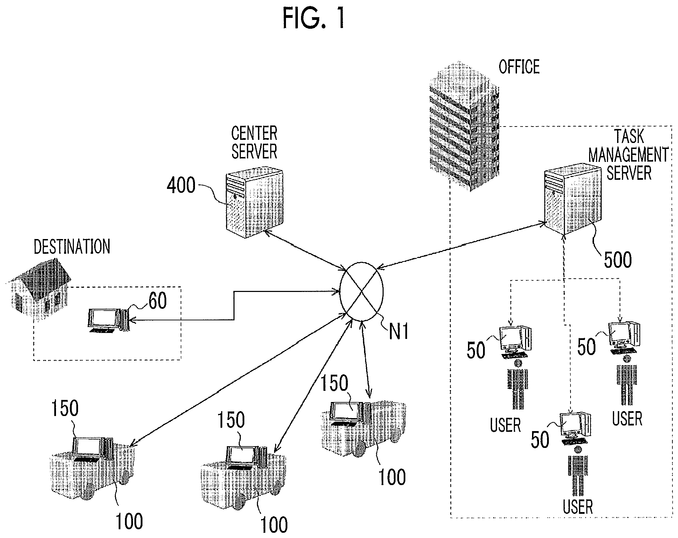

FIG. 1 shows a schematic configuration of a mobile system to which a task support system according to a first embodiment is applied. First, the overview of the mobile system will be described. The mobile system includes a plurality of autonomous traveling vehicles (hereinafter simply referred to as "vehicles") 100 performing autonomous traveling based on a given command, and a center server 400 that issues the command. A task management server 500 and a user terminal 50 of each user connected to the task management server 500 in the office are mainly illustrated as a configuration related to the task support system. The vehicle 100 is an autonomous driving vehicle that provides a predetermined service, and the center server 400 is an apparatus that manages the vehicles 100. The mobile system includes the vehicles 100. The task management server 500 is an apparatus that in an office, manages the task of an employee (hereinafter, simply referred to as "user") belonging to the office. However, when the user wants to use the vehicle 100 for task or the like, an access is made from the individual user terminal 50 to the center server 400 through the task management server 500. In FIG. 1, though the user terminal 60 installed in the user's home (in the first embodiment, it is the destination when the user moves by the vehicle 100 as described later) is also shown, the user terminal 60 is not related to the mobile system but is related to the task support system of the first embodiment, and the user terminal 60 is shown in FIG. 1 for convenience of explanation.

The vehicle 100 is a multipurpose movable body capable of changing the function of each individual and is a vehicle that autonomously travels on the road. The vehicle 100 used in the mobile system aims to move the user to a predetermined destination according to a request from the user. In this case, the predetermined destination is designated by the user, but the route to the destination may be designated by the user, or alternatively may appropriately be decided on the mobile system side. The vehicle 100 to which the task support system according to the first embodiment is applied needs to include an information processing apparatus 150 mounted thereon as described later, and as far as the apparatus is mounted, other configurations of the vehicle 100 are not limited to a specific configuration. The vehicle 100 does not necessarily need to be unmanned. For example, a person who provides a user getting on the vehicle 100 with a service, a security person, or the like may get on the vehicle 100. The vehicle 100 may not necessarily be a vehicle that always performs autonomous traveling. For example, it may be a vehicle in which the user does not drives and aids driving according to a situation.

In the example of FIG. 1, in the mobile system, the center server 400, the vehicle 100, and the task management server 500 are mutually connected by a network N1. The network N1 is, for example, a worldwide public communication network such as the Internet, and a wide area network (WAN) or another communication network may be employed. The network N1 may include a telephone communication network of a cellular phone or the like and a wireless communication network such as Wi-Fi. The user terminal 50 of each user is connected to the task management server 500 through an intranet built in the office. The intranet may also include a telephone communication network of a cellular phone or the like and a wireless communication network such as Wi-Fi.

In the mobile system, the center server 400 is an apparatus that instructs the vehicle 100 to operate when there is a request for use of the vehicle 100 from the user. The request for use is received from the user, and a point (departure) heading for pickup and a destination of user's movement are acquired. Thereafter, one vehicle 100 is selected from among the vehicles 100 traveling in the vicinity of the location of the user, and an operation command indicating "to transport the user from the departure point (pickup point) to the destination" is transmitted to the one vehicle 100. This enables the vehicle 100 to travel along a predetermined route. The operation command may include a command given to the vehicle 100 to provide a predetermined service to the user in response to a request from the user or without regard to the intention of the user in addition to a command for traveling connecting a departure and a destination.

The center server 400 is also a control apparatus for supporting the task performance of a user who is going to a predetermined destination by using the vehicle 100, in the task support system of the first embodiment. In this case, the center server 400 acquires information (information corresponding to "remaining task information" described later) on the user's task from the task management server 500, and then, performs a predetermined process so that the user's task can be performed efficiently in the moving vehicle 100. The predetermined process is a process that is performed independently of the process of transmitting the operation command to the vehicle 100, and is a process for task support of the user considering that the vehicle 100 moves to the destination by autonomous driving.

The task management server 500 is originally an apparatus for managing the task that each of the users belonging to a single office is responsible for. The task management server 500 includes a task management database for managing the user's task, and the task management server 500 manages the task contents, the progress of the task, and the like that each user is responsible for. The user performs the user's task by using the user terminal 50 of the user, and the user inputs the progress of the task into the task management database, or when the approval regarding the progress of the task is received on the terminal from the manager, or the like in the progress of task performance of the user, the progress of the task is automatically input to the task management database at the timing of the approval or the like. As described above, the task management server 500 is originally intended to manage the task of each user in a single office, but as described above, when the center server 400 supports task performance of the user, the task management server 500 cooperates with the center server 400 so as to provide needed information stored in the task management server 500 to the center server 400.

### System Configuration

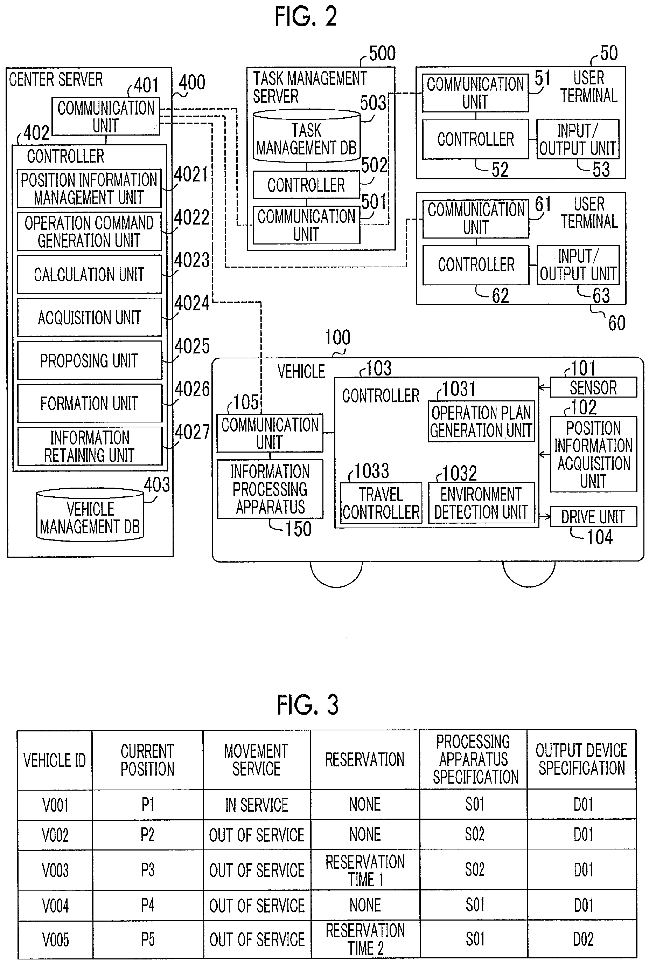

FIG. 2 is a block diagram schematically illustrating configurations of the center server 400, the vehicle 100, the task management server 500, and the user terminals 50 and 60 constituting the mobile system and the task support system. Hardware configurations and functional configurations of the center server 400, the vehicle 100, the task management server 500, and the user terminals 50 and 60 will be described with reference to FIG. 2.

The vehicle 100 is a vehicle traveling in accordance with an operation command acquired from the center server 400. Specifically, a travel route is generated based on an operation command acquired through wireless communication, and a vehicle travels on a road by a method suitable for autonomous traveling while sensing the surroundings of the vehicle. The vehicle 100 includes a sensor 101, a position information acquisition unit 102, a controller 103, a drive unit 104, a communication unit 105, and an information processing apparatus 150. The vehicle 100 operates with electric power supplied from a battery (not shown).

The sensor 101 is means for sensing surroundings of the vehicle 100 in order to acquire information needed for autonomous traveling of the vehicle 100, and typically includes a stereo camera, a laser scanner, a light detection and ranging (LIDAR) sensor, a radar, and the like. The information acquired by the sensor 101 is transmitted to the controller 103 and is used by the controller 103 for recognizing an obstacle and a traveling lane present around the vehicle 100. In the first embodiment, the sensor 101 includes a visible light camera for monitoring. The position information acquisition unit 102 is means for acquiring the current position of the vehicle 100, and typically includes a global positioning system (GPS) receiver and the like. The information acquired by the position information acquisition unit 102 is also transmitted to the controller 103, and is used, for example, for predetermined processes such as calculation of a route for the vehicle 100 to reach the destination using the current position of the vehicle 100, or calculation of a needed time for reaching the destination.

The controller 103 is a computer that controls the vehicle 100, based on the information acquired from the sensor 101 and the position information acquisition unit 102. The controller 103 is constituted by, for example, a microcomputer and causes a central processing unit (CPU) (not shown) to perform a program stored in storage means (such as a read only memory (ROM), not shown) or the like, so the functions for performing the various processes described above are realized. As a specific example of the various processes, the controller 103 includes function modules of an operation plan generation unit 1031, an environment detection unit 1032, and a travel controller 1033.

The operation plan generation unit 1031 acquires an operation command from the center server 400 and generates an operation plan of the host vehicle. The operation command includes information on a departure and a destination given to the vehicle 100. Therefore, the operation plan generation unit 1031 calculates a route to which the vehicle 100 is to travel based on the destination given from the center server 400 and the position of the host vehicle obtained by the position information acquisition unit 102 and generates operation plan. The operation plan includes data on the route on which the vehicle 100 travels calculated as described above and data prescribing a process to be performed by the vehicle 100 in part or all of the route. Examples of data included in the operation plan include, for example, the following (1) and (2).

### (1) Data Representing The Route on Which The Host Vehicle Travels by A Set of Road Links

The route on which the host vehicle travels may automatically be generated based on the given departure and destination, with reference to, for example, stored map data. The calculation of the route on which the host vehicle travels may be dependent on the processing of an external apparatus (for example, the center server 400) rather than calculated within the vehicle 100. In this case, the center server 400 may acquire the above-described host vehicle position from the vehicle 100, calculate a route on which the vehicle 100 travels, and may include the calculated route data in the operation command, or may be separately transmitted to the vehicle 100.

### (2) Data Representing A Process to Be Performed by The Host Vehicle at A Point on The Route

Examples of the process to be performed by the host vehicle include "picking up and dropping off a user" and "temporarily stopping by", but the embodiments are not limited thereto. The operation plan generated by the operation plan generation unit 1031 is transmitted to the travel controller 1033 described later.

Based on the data acquired by the sensor 101, the environment detection unit 1032 detects the surrounding environment of the vehicle 100 needed for autonomous traveling. Examples of an object to be detected include the number and position of lanes, the number and position of vehicles existing around the host vehicle, the number and position of obstacles (for example, pedestrians, bicycles, structures, buildings, or the like) existing around the host vehicle, the structure of the road, a road sign, and the like, but it is not limited thereto. As long as it is needed for autonomous traveling, the object to be detected can be anything. For example, when the sensor 101 is a stereo camera, objects around the vehicle 100 is detected by image processing of the image data captured by the stereo camera. Further, the environment detection unit 1032 may not only detect an object around the vehicle 100, but may also track the detected object (continue detecting the detected object). For example, the relative speed of the object can be obtained from the difference between the coordinates of the object detected one step before and the current object. Data on the surrounding environment of the vehicle 100 (hereinafter simply referred to as "environmental data") detected by the environment detection unit 1032 is transmitted to the travel controller 1033 to be described later.

Based on the operation plan generated by the operation plan generation unit 1031, the environment data generated by the environment detection unit 1032, and the position information of the host vehicle acquired by the position information acquisition unit 102, the travel controller 1033 generates a control command for controlling autonomous traveling of the host vehicle. For example, the travel controller 1033 generates a control command causing the vehicle to travel along a predetermined route and causing the host vehicle to travel such that an obstacle does not enter a predetermined safe area centered on the host vehicle. The generated control command is transmitted to the drive unit 104 described later. A publicly known method can be adopted as a method of generating a control command for causing the vehicle to autonomously travel.

The drive unit 104 is means for causing the vehicle 100 to travel based on the control command generated by the travel controller 1033. The drive unit 104 is configured to include, for example, a motor, an inverter, a brake, a steering mechanism, and the like for driving the wheels, and the motor, the brake, and the like are driven according to a control command, so that autonomous traveling of the vehicle 100 is realized. The communication unit 105 is communication means for connecting the vehicle 100 to the network N1. In the first embodiment, the communication unit 105 uses a mobile communication service such as 3rd Generation (3G) or Long Term Evolution (LTE) to be able to communicate with another device (for example, the center server 400) through the network N1.

Further, the vehicle 100 is provided with an information processing apparatus 150. The information processing apparatus 150 is an apparatus having a predetermined function to the extent that a user who gets on the vehicle 100 can perform a task, and includes, for example, a personal computer (PC) as a processing apparatus main body, a display and a printer as an output device, a mouse and a keyboard as an input device, and the like. Further, the information processing apparatus 150 may be configured to include a touch panel display that also functions as an input device and an output device. As described above, the information processing apparatus 150 is an apparatus for contributing to the task performance of the user, and is configured not to participate in the autonomous traveling of the vehicle 100 in principle. Therefore, the information processing apparatus 150 is configured so as not to act on the controller 103 in principle. However, the information processing apparatus 150 is configured to be capable of communicating with the center server 400 through the communication unit 105, and information for supporting task performance of the user can be exchanged between the information processing apparatus 150 and the center server 400.

Next, the center server 400 will be described. The center server 400 is an apparatus that manages autonomous traveling of the vehicles 100 and transmits an operation command. For example, when receiving a request for use of the vehicle 100 from the user, the center server 400 acquires the departure (boarding position of the user) and the destination, and then, transmits an operation command to the vehicle 100 traveling in the vicinity of the departure. The center server 400 is also an apparatus that performs a support process such that the user using the vehicle 100 can perform the task of the user in the vehicle 100 while moving. In this case, for example, the center server 400 acquires information on the task of the user who uses the vehicle 100, and aims for proposing task to be performed in the vehicle to the user.

The center server 400 has a general computer configuration. Specifically, the center server 400 is a computer provided with a processor (not shown) such as a central processing unit (CPU) or a digital signal processor (DSP), a main storage unit (not shown) such as a random access memory (RAM) and a read only memory (ROM), an auxiliary storage unit (not shown) such as an erasable programmable ROM (EPROM), a hard disk drive (HDD), and a removable medium. The removable medium is, for example, a universal serial bus (USB) memory, or a disk recording medium such as a compact disc (CD) or a digital versatile disc (DVD). An operating system (OS), various programs, various tables and the like are stored in the auxiliary storage unit, and the programs stored in the auxiliary storage unit is loaded into a work area of the main storage unit and performed, and each constituent element and the like is controlled by the execution of the programs, so it is possible to realize a function consistent with a predetermined purpose.

The center server 400 includes a communication unit 401. The communication unit 401 is connected to another apparatus through the network N1, and performs communication with the vehicle 100, the task management server 500, and the like. The communication unit 401 is, for example, a local area network (LAN) interface board and a wireless communication circuit for wireless communication. The LAN interface board and the wireless communication circuit are connected to the network N1 such as the Internet that is a public communication network.

The center server 400 includes a vehicle management database (DB) 403 storing various types of information on the vehicles 100 performing autonomous traveling in the auxiliary storage unit of the center server 400. The database (DB) is constructed by a database management system (DBMS) program performed by the processor managing data to be stored in the auxiliary storage unit. The vehicle management DB 403 is, for example, a relational database.

Here, the configuration of the vehicle management information stored in the vehicle management DB 403 will be described with reference to FIG. 3. FIG. 3 illustrates the table structure of vehicle management information. The vehicle management information table has fields of a vehicle ID, a current position, a movement service, and a reservation. In the vehicle ID field, identification information for specifying all vehicles managed by the center server 400 in the mobile system is input. In the current position field, information for specifying a location where each vehicle 100 is located at the present time is input. Specifically, every time the information related to the latitude and the longitude for specifying the current position of the vehicle 100 and the information acquired by the position information acquisition unit 102 in the vehicle 100 is transmitted from the vehicle 100 to the center server 400, the current position field corresponding to the vehicle 100 in the vehicle management DB 403 is updated. Information indicating whether or not the vehicle 100 is currently providing a user movement service by autonomous traveling is input to a movement service field. For example, "in service" is input to the movement service field when the vehicle 100 is providing the movement service, and "out of service" is input to the movement service field when the vehicle 100 is not providing the movement service. In the reservation field, information as to whether or not provision of a user movement service by autonomous traveling of the vehicle 100 is reserved according to a request from the user is input. For example, when the provision of a movement service is reserved, the time zone scheduled to provide the service is input in the reservation field, and when the provision of the movement service is not reserved, "no" is input in the reservation field. The reservation means reservation of a movement service after the present time. Therefore, even in the case of a vehicle 100 currently providing a movement service to a single user, when the service is scheduled to be provided to another user after the service is terminated, the scheduled time zone is to be input in the reservation field.

The vehicle management information also includes a processing apparatus specification field and an output device specification field related to the information processing apparatus 150 provided in the vehicle 100. In the processing apparatus specification field, information on the specification of the processing apparatus main body of the information processing apparatus 150 is input. Specifically, information on the type of application used in the user's task and the processing capability of the processing apparatus main body (the type of an operating system (OS), a memory capacity, a CPU performance, and the like) needed for executing the application is input to the field. In the first embodiment, it is assumed that two values S01 and S02 are input in the processing apparatus specification field in accordance with the specification of the processing apparatus main body of the information processing apparatus 150. Information on the specification of the output device of the information processing apparatus 150 is input to the output device specification field. Specifically, information on the size and number of displays as an output device needed for the task of the user, information on the presence or absence of a printer, and the like are input to the above-described field. In the first embodiment, it is assumed that two values of D01 and D02 are input to the output device specification field in accordance with the specification of the output device of the information processing apparatus 150.

In the center server 400, the controller 402 is formed as a functional unit by executing the program by the above-described processor. As described above, the controller 402 performs a process relating to autonomous traveling of the vehicle 100 and a process relating to task performance support of the user in the moving vehicle 100. Specifically, the controller 402 includes a position information management unit 4021, an operation command generation unit 4022, a calculation unit 4023, an acquisition unit 4024, a proposing unit 4025, a formation unit 4026, and an information retaining unit 4027 as functional units. Among them, the position information management unit 4021 and the operation command generation unit 4022 are functional units related to the process relating to autonomous traveling of the vehicle 100, and the calculation unit 4023, the acquisition unit 4024, the proposing unit 4025, the formation unit 4026, and the information retaining unit 4027 are functional units related to the process relating to task performance support of the user.

First, the position information management unit 4021 and the operation command generation unit 4022 will be described. The position information management unit 4021 collects and manages position information from the vehicles 100 managed by the center server 400. Specifically, current position information is received from the vehicles 100 at that time at every predetermined period and stored in the vehicle management DB 403.

When receiving a request for use of the vehicle 100 from the user, the operation command generation unit 4022 decides the vehicle 100 to be dispatched to the user, and generates an operation command according to the request for use. The request for use includes information on a departure where the user gets on the vehicle 100 and a destination where the user gets off the vehicle 100. The request for use may include a way point through which the user passes in a process from the departure to the destination. When the way point is included in the request for use, when the user wants to stop the vehicle 100 for a predetermined time at the way point, the fact that the user wants to stop the vehicle 100 may be included in the request for use. Upon receipt of the request for use as described above, the operation command generation unit 4022 generates an operation command assuming that the vehicle passes through a designated way point and stops at the way point for a predetermined time.

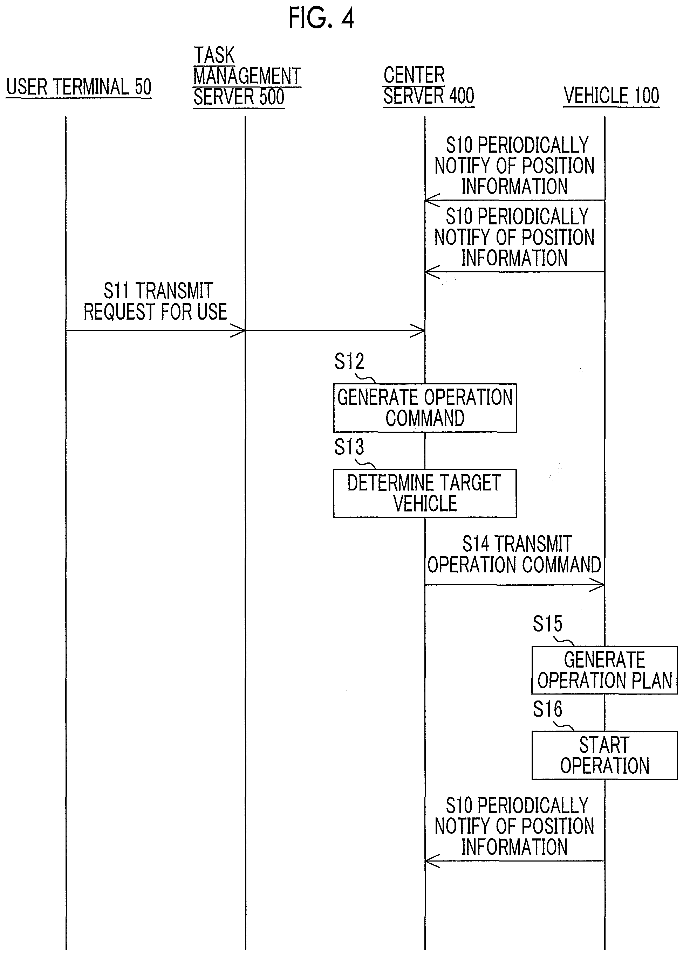

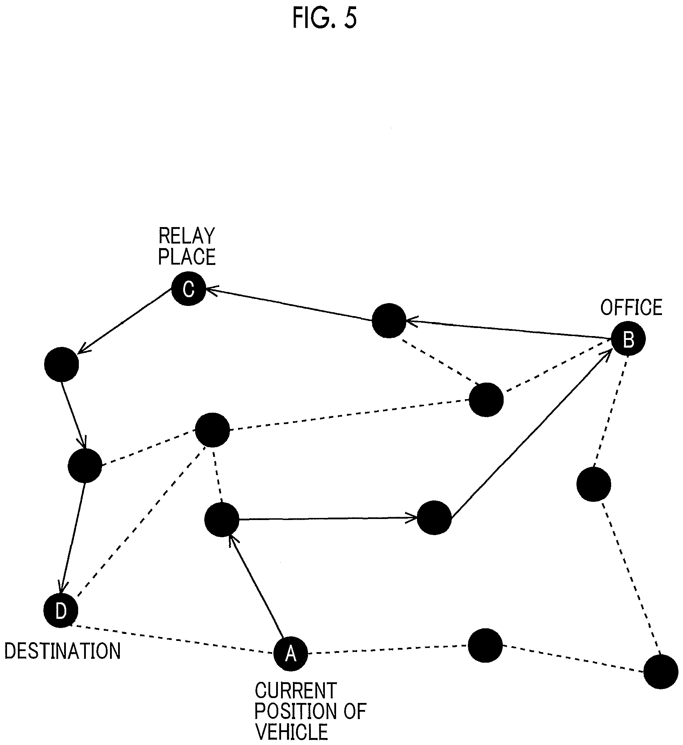

Here, a processing flow since the operation command generation unit 4022 generates an operation command based on a request for use of the user until the vehicle 100 starts a user movement service by autonomous traveling will be described based on FIG. 4. In the first embodiment, an explanation will be given based on an example in which the vehicle 100 operates the road network shown in FIG. 5.

The vehicle 100 periodically notifies the center server 400 of the position information (step S10). The center server 400 inputs the received current position information to the current position field corresponding to the vehicle 100 in the vehicle management DB 403. The process of step S10 is repeatedly performed at regular time intervals.

When the user transmits a request for use for requesting dispatch of the vehicle 100 from the user terminal 50 (to be described later) to the center server 400 through the task management server 500 (step S11), the operation command generation unit 4022 of the center server 400 generates an operation command according to the request for use (step S12). The operation command designates at least the departure and the destination. The operation command may designate a travel route on which the vehicle 100 reaches the destination from the departure. It may include a process to be performed on the route and information on the service to be provided. Here, it is assumed that the user has been requested to move from the node B to the node D.

In step S13, the operation command generation unit 4022 decides the vehicle 100 that provides the user with the movement service. For example, the operation command generation unit 4022 refers to the current position information of the vehicle 100 stored in the vehicle management DB 403, and decides the vehicle 100 capable of providing the movement service requested for use, in consideration of the use time of the vehicle 100 that the user wants to use. For example, in the case of a request for use that the user wants to use immediately, based on the vehicle management information stored in the vehicle management DB 403, a vehicle that is nearest to the departure of the user or a vehicle that can reach the departure of the user the earliest is decided as the vehicle 100 corresponding to the request for use, among the vehicles 100 that do not provide the movement service at that time and do not overlap the use time and the reservation time desired by the user. In the first embodiment, it is assumed that the vehicle 100 located at the node A shown in FIG. 5 is decided. In response to this, an operation command is transmitted from the center server 400 to the vehicle 100 (step S14).

Next, in step S15, the operation plan generation unit 1031 in the vehicle 100 generates an operation plan based on the received operation command from the center server 400. In the case of the first embodiment, for example, an operation plan is generated in which the vehicle travels on the route indicated by the solid line in FIG. 5 and the user is to get on at the node B and to get off at the node D. The generated operation plan is transmitted to the travel controller 1033, and the operation is started (step S16). During the operation, the current position information of the vehicle 100 is periodically transmitted to the center server 400.

Although the example in which the vehicle 100 generates the operation plan based on the request for use is described above, the generation of the operation plan may be performed by the center server 400, and in this case, the operation plan generated by the center server 400 is transmitted to the vehicle 100 decided in step S13.

Next, the calculation unit 4023, the acquisition unit 4024, the proposing unit 4025, the formation unit 4026, and the information retaining unit 4027 related to the task support system will be described. The calculation unit 4023 calculates a time needed for the user to reach the destination after getting on the vehicle 100 at the departure (hereinafter simply referred to as "needed time"). In the examples shown in FIGS. 4 and 5, the travel route of the vehicle 100 is generated by the operation plan generation unit 1031 of the vehicle 100. Therefore, when the calculation unit 4023 calculates the needed time, after the operation plan is generated by the operation plan generation unit 1031, the calculation unit 4023 acquires the information on the generated operation plan and uses the information on the travel route of the vehicle 100 included in the operation plan. For example, based on the example shown in FIG. 5, the calculation unit 4023 can calculate the needed time, based on the distance from the node B that is the departure to the node D that is the destination, along the travel route according to the operation plan and the average speed of the vehicle 100. In the calculation, the information on the traffic situation on the travel route from the node B to the node D may be acquired from the outside, and the needed time may be calculated based on the assumed speed of the vehicle 100 in which the traffic situation is reflected. When the user transfers to center server 400, an intention to temporarily get off the vehicle 100 at the node C, passing through the node C on the way from the node B to the node D, when the user requests use of the vehicle 100, the time of getting off at the node C (the time at which the user gets off the vehicle 100 and does not perform the task that has been performed in the vehicle 100) is not included in the needed time.

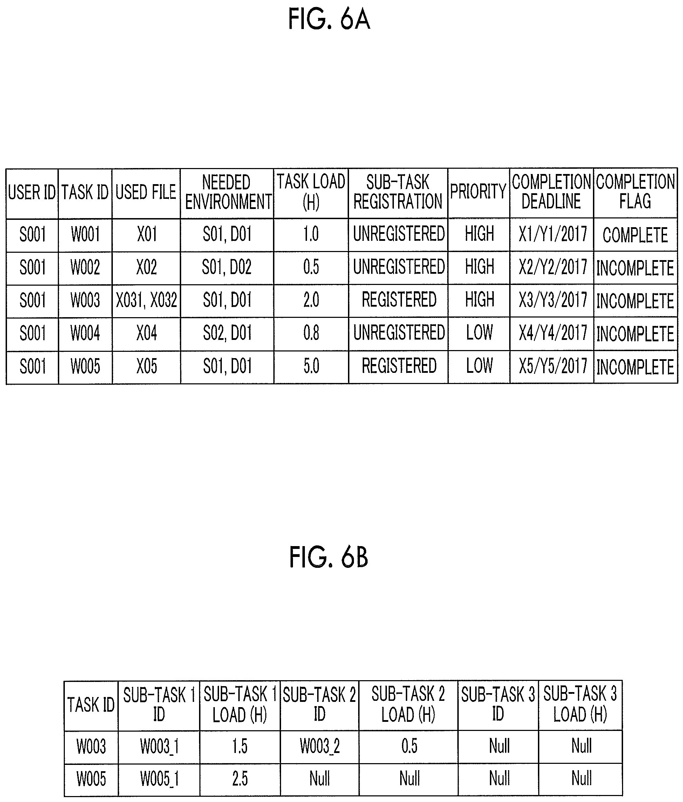

The acquisition unit 4024 acquires remaining task information on the remaining task that has not yet been completed and the user is desirable to perform, through the network N1, from the task management database (DB) 503 in the task management server 500, at the time when the user uses the vehicle 100, that is, when the user gets on the vehicle 100 after leaving the office. The task management DB 503 is a database for managing the task that the user using the vehicle 100 is performing at the office. The task management DB 503 stores task management information (see FIG. 6A and FIG. 6B) including the remaining task information, and details of the remaining task information and task management information will be described later.

Next, the proposing unit 4025 extracts the tasks that is able to be completed by using the information processing apparatus 150 provided in the vehicle 100 used by the user within the needed time calculated by the calculation unit 4023, from among the remaining tasks included in the remaining task information acquired by the acquisition unit 4024, as the predetermined task. In the extraction process described above, the task load (the time needed for completion) of the remaining task may be compared with the needed time. Details of the extraction process will be described later. The proposing unit 4025 transmits the proposal information on the extracted predetermined task to a predetermined apparatus accessible by the user, and makes a proposal to the user, thereby promoting efficient task performance by the user in the moving vehicle 100. The predetermined apparatus may be the information processing apparatus 150 of a vehicle used by the user, or may be the user terminal 50, a portable terminal personally carried by a user, and the like.

With respect to the proposal of the predetermined task by the proposing unit 4025, the user recognizes the presence of the predetermined task and performs a process of accepting the proposal for the proposing unit 4025 (the center server 400), so the process by the formation unit 4026 is performed. When the user accepts the proposal by the proposing unit 4025, the formation unit 4026 forms a task-possible state, where the user can access the task information needed for the proposed a predetermined task by using the information processing apparatus 150, in the information processing apparatus 150. That is, in a case where the formation unit 4026 forms a task-possible state in the information processing apparatus 150, when the user gets on the vehicle 100, the user can immediately perform the predetermined task using the information processing apparatus 150. The information on the task information needed for the predetermined task is stored in the task management DB 503, and the formation unit 4026 can form the task-possible state by accessing the task management DB 503. Details of the forming process will be described later.

Next, when the vehicle 100 reaches the destination, when user is not able to complete the predetermined task proposed by the proposing unit 4025 in the moving vehicle 100, the information retaining unit 4027 performs a process of causing the predetermined task that is still in an incomplete state to be continued in another place. That is, regarding the predetermined task that is in an incomplete state when the vehicle 100 reaches the destination, the information retaining unit 4027 retains predetermined information related to the task situation such that the same situation as the task situation formed in the information processing apparatus 150 can be formed in another information processing apparatus that is related to the destination and is accessible by the user. The task situation relating to the predetermined task is the latest situation in which the task information needed for the predetermined task is placed, that is updated as needed as the task is performed. Another information processing apparatus associated with the destination is an apparatus that is disposed so as to be accessible, in the destination reached by the user or near the destination. In the first embodiment, as shown in FIG. 1, the user terminal 60 disposed in the destination corresponds to another information processing apparatus. Therefore, the information retaining unit 4027 obtains the task information of the predetermined task in the latest situation from the information processing apparatus 150 of the vehicle 100, and retains it in the center server 400. The user who has reached the destination accesses the task information retained by the information retaining unit 4027 through the user terminal 60 to be able to further continue to perform the predetermined task and aim to complete the predetermined task.

Either one of the functional constituent elements of the center server 400 or a part of the process of the center server 400 may be performed by another computer connected to the network N1. A series of processes performed by the center server 400 can be performed by hardware, but it can also be performed by software.

Next, the task management server 500 will be described. The task management server 500 has a general computer configuration. The task management server 500 manages the task progress of each of a plurality of users belonging to the office. Therefore, the user terminal 50 of each user can access the task management server 500 through the intranet in the office. The user can access the center server 400 from the user terminal 50 through the task management server 500 and make a request to use the vehicle 100. At this time, the task management server 500 performs a relay process between the user terminal 50 and the center server 400.

In detail, similarly to the center server 400, the task management server 500 is a computer including a processor (not shown) such as a CPU and a DSP, a main storage unit (not shown) such as a RAM and a ROM, and an auxiliary storage unit (not shown) such as an EPROM, a hard disk drive, a removable medium. An operating system, various programs, various tables and the like are stored in the auxiliary storage unit, and the programs stored in the auxiliary storage unit is loaded into a work area of the main storage unit and performed, and each constituent element and the like is controlled by the execution of the programs, so it is possible to realize a function consistent with a predetermined purpose.

The task management server 500 includes a communication unit 501. Similarly to the communication unit 401 of the center server 400, the communication unit 501 is connected to another apparatus and performs communication with the task management server 500 and another apparatus (for example, the center server 400). The communication unit 501 is, for example, a LAN interface board and a wireless communication circuit for wireless communication. The LAN interface board and the wireless communication circuit are connected to the network N1 such as the Internet that is a public communication network.

The task management server 500 includes the task management database (DB) 503 described above. The task management DB 503 is formed by storing the task management information on the tasks to be performed by each user in the auxiliary storage unit, and in the auxiliary storage unit, each user is associated with the corresponding task management information. The task management DB 503 is constructed by a program of the database management system performed by the processor managing the data stored in the auxiliary storage unit. The task management DB 503 is, for example, a relational database.

Here, the configuration of the task management information stored in the task management DB 503 will be described with reference to FIG. 6A. FIG. 6A exemplifies the table structure of the task management information, and the task management information table shows fields of a user ID, a task ID, a used file, needed environment, a task load, sub-task registration, a priority, a completion deadline, and a completion flag. In the user ID field, identification information for specifying the user is input. In the task ID field, identification information for specifying task to be performed by the user is input. In the used file field, information on an electronic file to be used at the time of performing each task specified by the task ID is input. Specifically, the information is an electronic file that is used in the corresponding task and can be processed by the information processing apparatus 150. In the example shown in FIG. 6A, two electronic files X031 and X032 are needed for the task specified by task ID W003, and one electronic file is needed for each of the other tasks. In the needed environment field, in order to process the electronic file input in the used file field by the information processing apparatus 150, information on the specification of the processing apparatus main body needed for the information processing apparatus and information on the specification of the output device are input. The information on the specifications corresponds to the information input to the processing apparatus specification field and the output device specification field of the vehicle management information shown in FIG. 3. In the first embodiment, a combination of information (S01 or S02) input in the processing apparatus specification field and information (D01 or D02) input to the output device specification field is input to the needed environment field. In the example shown in FIG. 6A, for the task specified by the task ID W003, in order to perform the task described above, that is, for the processes of the electronic files X031 and X032, an information processing apparatus 150 having the processing apparatus specification S01 and the output device specification D01 is needed.

Next, in the task load field, a parameter related to the magnitude of the load for completing each task specified by the task ID is input. Specifically, as the magnitude of the load, the value of the time needed for completing the task is input. In the example shown in FIG. 6A, the load amount 2.0 hours (H) is input for the task specified by the task ID W003, and the load amount 5.0 hours (H) is input for the task specified by W005. The value of the time as the load amount may be a value input by the user through the user terminal 50, or alternatively may be a value estimated by the task management server 500 based on the history data of the time needed for completing the task with respect to the task performed by the user in the past.

In the sub-task registration field, for each task specified by the task ID, information indicating whether or not sub-tasks, obtained by performing division such that the task load is smaller than the original load amount (the load amount of the value input in the task load field), are registered is input. When a single task of the user is completed by performing, for example, a process b after performing a process a, and the task performing the process a and the task performing the process b can be temporally divided, the task performs each process can be a sub-task. The division of the task of the user into the sub-tasks can be appropriately performed from the viewpoint of the task performed by the user, such as that there is no trouble even when the flow of the task is temporarily blocked. In the first embodiment, when a sub-task is registered with respect to each task specified by a task ID, "registered" is input in the sub-task registration field, and when a sub-task is not registered with respect to each task specified by a task ID, "unregistered" is input in the sub-task registration field. In the example shown in FIG. 6A, sub-tasks are registered for the tasks having task IDs specified by W003 and W005.

As shown in FIG. 6B, with respect to the task for which "registered" is input in the sub-task registration field, sub-task information indicating what load amount of sub-task is registered is stored in the task management DB 503. FIG. 6B exemplifies the table structure of the sub-task information, and information on up to three sub-tasks is included in the sub-task information table. Specifically, the sub-task information table includes three combinations of identification information for specifying the sub-task (information input to the sub-task 1 ID field or the like) and information indicating the magnitude of the task load of the corresponding sub-task (information input to the sub-task 1 load field, or the like). In the example shown in FIG. 6B, it can be understood that two sub-tasks are registered for the task specified by the task ID W003, and the original task having the load amount of 2.0 H is divided into a sub-task of 1.5 H and a sub-task of 0.5H. It can be understood that with respect to the task specified by the task ID W005, only one sub-task with a load amount of 2.5 H is registered. In this case, considering that the load amount of the original task is 5.0 H, it is not clear how the sub-task corresponding to the load amount of the remaining 2.5 H is structured.

Here, returning to FIG. 6A again, the description of the task management information is continued. The priority field, the completion deadline field, and the completion flag field of the task management information will be described. In the priority field, information on the priority of performance of each task is input with respect to each task specified by the task ID. In the first embodiment, as shown in FIG. 6A, the priority of task performance is expressed in two stages, and specifically, "high" is input with respect to task to be preferentially performed, and "low" is input with respect to task not to be preferentially performed. The information on the priority input to the priority field may be information classified into three or more stages. Next, in the completion deadline field, the time limit for performing each task is input, with respect to each task specified by the task ID. Therefore, each task means a task that the user has to complete by the deadline date that is input in the completion deadline field.

Next, in the completion flag field, information indicating whether the performance by the user has been completed with respect to each task specified by the task ID is input. In the first embodiment, as shown in FIG. 6A, "complete" is input with respect to the completed task and "incomplete" is input with respect to the task that has not completed yet. As described above, the task management information shown in FIG. 6A includes task completed by the user and task not yet completed. Therefore, out of the task management information, the information on the task having a completion flag "incomplete" is the remaining task information on the remaining task to be completed by the user. In other words, a part of the task management information stored in the task management DB 503 includes the remaining task information.

In the task management server 500, the controller 502 is formed as a functional unit by executing the program by the above-described processor. The controller 502 performs management control such as registration and update of information related to the user's task in the task management DB 503. For example, when the user performs the task of the user through the user terminal 50, with respect to a new task, the controller 502 generates task management information corresponding to the user by associating information such as a used file together with the identification information of the new task with the identification information of the user, and stores it in the task management DB 503. With respect to the task that is registered in the task management DB 503, when the user makes an input through the user terminal 50, the information related to the task registered according to the above-described input contents (for example, registration of a sub-task and update of the completion flag) is updated. When the user requests to use the vehicle 100, the controller 502 relays communication between the user terminal 50 and the center server 400 through the communication unit 501.

Either one of the functional constituent elements of the task management server 500 or a part of the process of the task management server 500 may be performed by another computer connected to the network N1. A series of processes performed by the task management server 500 can be performed by hardware, but it can also be performed by software.

Next, the user terminal 50 of the user will be described. In the first embodiment, the user terminal 50 is mainly used by the user to perform the task of the user in the office, but the user terminal 50 may be used for other purposes. The user terminal 50 is a personal computer (PC) connected to the task management server 500 through an intranet in the office, but may be a small computer such as a smartphone, a mobile phone, a tablet terminal, a personal information terminal, or a wearable computer (such as a smart watch), that is used for the task of the user. The user can also connect to the network N1 from the user terminal 50 through the task management server 500. The user terminal 50 of the user includes a communication unit 51, a controller 52, and an input/output unit 53.

The communication unit 51 is communication means for connection to the task management server 500 through the intranet. The controller 52 is a computer that controls the user terminal 50. The controller 52 is constituted by, for example, a microcomputer and causes a CPU (none is shown) to perform a program stored in storage means (such as a ROM), so the functions for performing the various processes are realized. The controller 52 performs interaction with the user through the input/output unit 53. The input/output unit 53 is means for receiving an input operation performed by the user and presenting information to the user. Specifically, the input/output unit 53 includes a touch panel and touch panel control means, and a liquid crystal display and liquid crystal display control means. In the present embodiment, the touch panel and the liquid crystal display are one touch panel display. The input operation performed by the user is not limited to the input operation performed through the touch panel display. For example, the input operation may be performed by using a hardware switch or the like.

For example, the controller 52 performs a predetermined application, and inputs and outputs information on the user's task to and from the task management DB 503 through the input/output unit 53 with respect to the task management server 500. When the user wants to use the vehicle 100, the controller 52 delivers a request for use of the user through the input/output unit 53 to the center server 400 and causes the operation command generation unit 4022 of the center server 400 to perform an operation command generation process based on the request for use.

Next, the user terminal 60 of the user will be described. In the first embodiment, the user terminal 60 is a device installed in a destination that is a movement destination from the office and accessible by the user. For example, it is an information processing apparatus of a user installed at the user's home. The user terminal 60 may be a personal computer, a smartphone, a mobile phone, a tablet terminal, a personal information terminal, or a wearable computer (such as smart watch). The user can also connect to the network N1 from the user terminal 60.

The user terminal 60 is configured to include a communication unit 61, a controller 62, and an input/output unit 63. The communication unit 61 is communication means for connection to the network N1. The input/output unit 63 is similar to the input/output unit 53. The controller 62 performs interaction with the user through the input/output unit 63. For example, when the user inputs predetermined information through the input/output unit 63, the controller 62 performs a predetermined process based on the above-described input information. The predetermined process includes a process of continuing a predetermined task that the user has performed inside the vehicle 100 but is not able to complete while the use moves by the vehicle 100, as described later.

### Process Flow

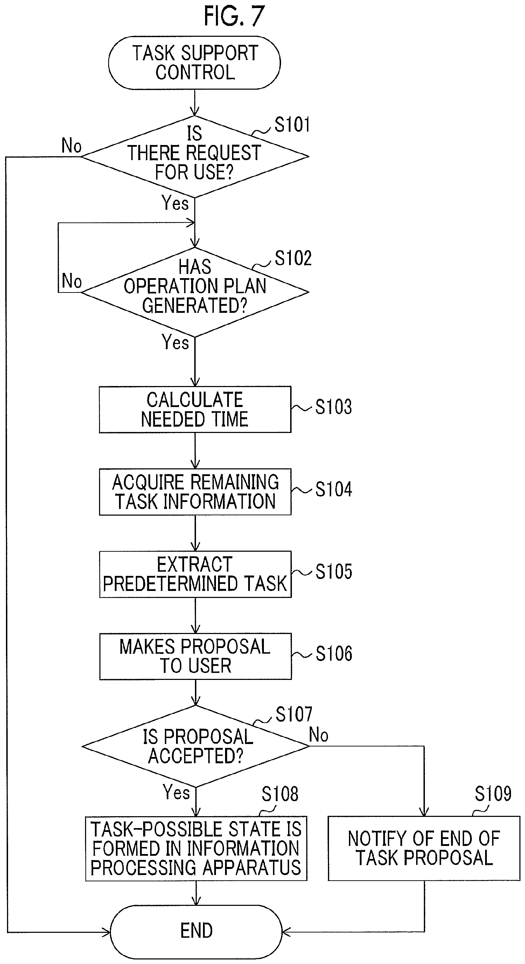

FIG. 7 is a flowchart of task support control that is repeatedly performed at predetermined intervals in the center server 400. The task support control is control for enabling the user to efficiently perform the task of the user in the moving vehicle 100 when the user wants to move to the destination using the vehicle 100. First, in step S101, the controller 402 determines whether or not there is a request for use of the vehicle 100 from the user, that is, the user requests the driver of the vehicle 100 to pick up the user at a departure and the user requests dispatch of a vehicle for moving toward a destination. As described above, the user sends an instruction on the request for use of the vehicle 100 to the center server 400 through the user terminal 50 of the user, and the instruction includes information indicating the departure and the destination, and identification information for identifying the user who makes a request for use (information equivalent to information input in the user ID field of the task management information stored in the task management DB 503, hereinafter simply referred to as "user identification information"). When an affirmative determination is made in step S101, the process proceeds to step S102, whereas when a negative determination is made in step S101, the present control is terminated. In step S102 and the subsequent steps, a process for a specific user corresponding to the user identification information is performed.

Next, in step S102, the operation command generation unit 4022 decides the vehicle 100 to be dispatched based on the request for use from the user, issues an operation command to the decided vehicle 100, and determines whether or not the operation plan has been generated by the operation plan generation unit 1031 of the vehicle 100. That is, the determination is made whether or not the process of steps S13 to S15 shown in FIG. 4 has been completed. This is because the determination uses the information on the travel route included in the operation plan generated on the vehicle 100 side when calculating the needed time by the calculation unit 4023 as described above. When an affirmative determination is made in step S102, the process proceeds to step S103, whereas when a negative determination is made in step S102, the determination process in step S102 is performed again.

As an alternative method, in a case where the center server 400 side has the same configuration as the operation plan generation unit 1031 of the vehicle 100, it is not needed for the calculation unit 4023 to acquire information on the travel route from the vehicle 100 when calculating the needed time. In that case, instead of the process of step S102, a process of calculating the route on which the vehicle 100 is to travel based on the information on the departure and the destination obtained from the user's request for use may be performed.

In step S103, the calculation unit 4023 calculates the needed time for the vehicle 100 to reach the destination from the departure. In the above-described calculation process, as described above, the calculation unit 4023 acquires information on the travel route from the vehicle 100. Next, in step S104, the acquisition unit 4024 acquires remaining task information on the remaining task that has not yet been completed and the user is desirable to perform, from the task management DB 503 in the task management server 500, at the time when the user gets on the vehicle 100. The remaining task information is information on the task with the completion flag "incomplete" out of the task management information (see FIG. 6A) stored in the task management DB 503 with respect to the user.

Next, in step S105, the proposing unit 4025 first extracts a predetermined task. In the above-described extraction process, the task that is determined to be capable of being completed within the needed time calculated in step S103 is extracted as a predetermined task, by using the information processing apparatus 150 provided in the vehicle 100, among the tasks (remaining tasks) included in the remaining task information. The above described fact that the user is able to complete the remaining task in the moving vehicle 100 before the vehicle 100 reaches the destination means that the user completes the task without interrupting and efficiency of task performance described above is expected. In the extraction process of the predetermined task, specifically, the remaining task that satisfies the following conditions 1 and 2 is extracted as a predetermined task.

### Condition 1

It is needed that the task load is within the needed time calculated in step S103, among the remaining tasks included in the remaining task information. That is, a remaining task expected to be completed within a needed time is regarded as a candidate for the predetermined task.

### Condition 2

It requests the information processing apparatus 150 provided in the vehicle 100 to have a needed environment capable of processing an electronic file (information to be input into a used file field) to be used for performing the task, among the remaining tasks included in the remaining task information. That is, from the viewpoint of processing the electronic file, the remaining task that can be handled by the information processing apparatus 150 provided in the vehicle 100 is a candidate for the predetermined task.

Here, a specific example of the extraction process will be described. In the present example, it is assumed that the vehicle 100 (that is, the vehicle 100 decided in step S13) sent to the origin of the user is a vehicle with the vehicle ID V004 shown in the vehicle management information in FIG. 3, and the needed time calculated in step S103 is 3 hours (3.0 H). With the task management information of FIG. 6A, there are four tasks W002 to W005 as remaining tasks. In this case, considering the condition 1, the remaining tasks of W002, W003, W004 having the task load of 3.0 H or less remains as candidates for the predetermined task. Considering the condition 2, the processing apparatus specification is S01 and the output apparatus specification is D01 regarding the information processing apparatus 150 of the vehicle 100 specified by V004, so that the predetermined task is restricted to the remaining task of W003.

### Alternative Method 1 of Extraction Process

Here, an alternative method of the extraction process of the predetermined task will be described. As a modification example of the condition 1, when a remaining task having registered sub-tasks, among the remaining tasks included in the remaining task information, the load of the sub-task included in the remaining task (the load input in the load field of each sub-task, in the sub-task information in FIG. 6B) may be used as an alternative condition of the condition of being within the needed time calculated in step S103. That is, the remaining task including sub-tasks expected to be completed within the needed time is regarded as a candidate for the predetermined task. In this case, there is a possibility that the user may not be able to complete the remaining task but the probability of completing the sub-tasks constituting the remaining task is high, so that it is considered to contribute to the improvement of the efficiency of task performance of the user. In the case of the above-described conditions, the remaining task of W005 includes a sub-task with a load shorter than 3.0 H and the specifications of the information processing apparatus 150 needed for performing the remaining task of W005 are S01 and D01, so that in addition to the remaining task of W003, the remaining task of W005 is also extracted as a predetermined task.

### Alternative Method 2 of Extraction Process

An alternative method of the extraction process of a predetermined task will be described. As a condition for extracting a predetermined task, a condition based on the priority of a remaining task may be set. Specifically, when a plurality of remaining tasks is extracted according to the condition 1 (or the alternative condition shown in alternative method 1) and condition 2, the predetermined task may be restricted to the remaining task with a relatively high priority, that is, the remaining task for which "high" is input in the priority field. For example, when the remaining task of W003 and the remaining task of W005 are extracted as the candidates for the predetermined task according to the alternative method 1, the remaining task of W003, for which "high" is input in the priority field, may be finally regarded as a predetermined task. Through the process as described above, the remaining task to be performed preferentially by the user is suitably extracted.

### Alternative Method 3 of Extraction Process

An alternative method of the extraction process of a predetermined task will be described. As a condition for extracting a predetermined task, a condition based on the period remaining until a deadline for completion may be set. Specifically, when a plurality of remaining tasks is extracted according to the condition 1 (or the alternative condition shown in alternative method 1) and condition 2, the predetermined task may be restricted to the remaining task with the shortest period remaining until a deadline for completion. The period remaining until a deadline for completion is calculated as the difference between the deadline date and time input in the completion deadline field and the present time. Through the process as described above, the remaining task to be performed by the user by the completion deadline is suitably extracted, so that it is possible to suppress the completion deadline.

Return to the description of FIG. 7. After the extraction of the predetermined task in step S105, the extracted predetermined task is proposed to the user in step S106. The above-described proposal process is also performed by the proposing unit 4025. Specifically, the proposing unit 4025 transmits information proposing to perform the predetermined task in the vehicle 100, to an output device (display) included in the information processing apparatus 150 of the vehicle 100 on which the user gets. In the information processing apparatus to which the information is transmitted, the content of the proposal is displayed on the display. When there is a plurality of extracted predetermined tasks, all of the predetermined tasks may be displayed on the display. An inquiry as to whether or not to accept the proposal is also displayed on the display. Therefore, when the vehicle 100 arrives at the departure and the user gets on the vehicle 100, the user can answer to the inquiry through the input device (a mouse, a keyboard, and the like) of the information processing apparatus 150. For example, when icons of "acceptance" and "refusal" are displayed on a display as an inquiry, the user can answer the inquiry by performing a process for selecting any icon.

Then, in step S107, the determination is made whether or not the response to the inquiry is acceptance of the proposal by the proposing unit 4025. When the determination is affirmative, the process proceeds to step S108, and when the determination is negative, the process proceeds to step S109. In step S108, the formation unit 4026 forms a task-possible state in the information processing apparatus 150, in which the user can access the electronic file needed for performing the predetermined task proposed in step S106. For example, when the proposed task information is the remaining task of W003, a task-possible state is formed in which the user can process the electronic files X031 and X032 used for performing the remaining task of W003 in the information processing apparatus 150. In the task-possible state, the information processing apparatus 150 is in a state in which it can access the electronic file stored in the task management server 500. Specifically, since the information processing apparatus 150 makes a request to the task management server 500 according to an instruction from the formation unit 4026, the access right to the electronic file is set for the information processing apparatus 150. Thus, when the user gets on the vehicle 100, the user can immediately perform the predetermined task using the information processing apparatus 150. In step S109, based on the fact that the proposal of the predetermined task is refused by the user, the user is notified of the end of the task proposal. The notification is performed on the display of the information processing apparatus 150 by the proposing unit 4025.

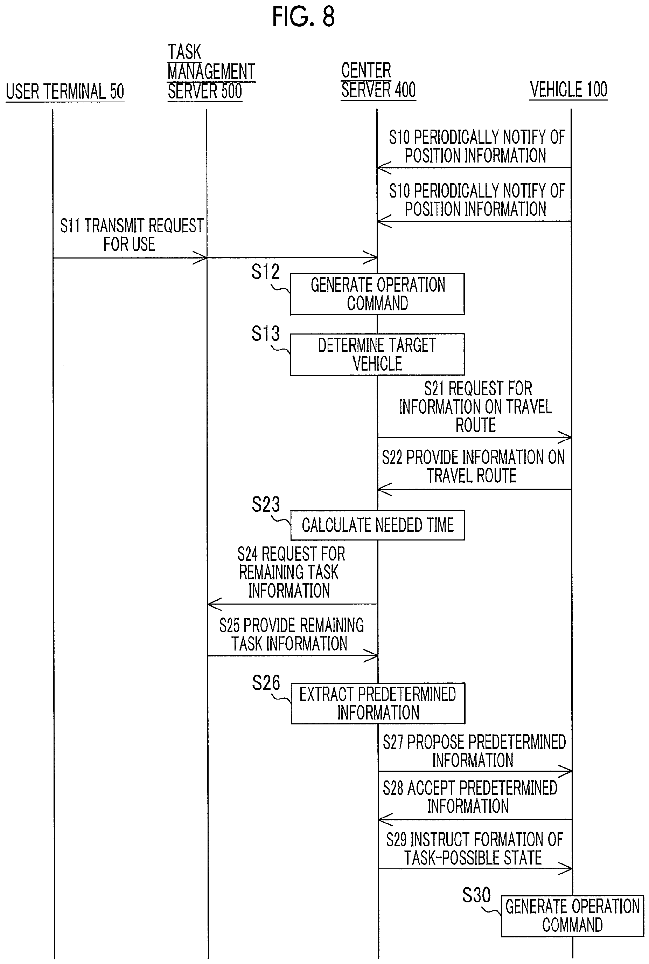

Next, the flow of information between the center server 400, the vehicle 100, the task management server 500, and the user terminal 50 when the task support control is performed will be described with reference to FIG. 8. The information flow shown in FIG. 4 is based on the aspect of the mobile system. On the other hand, the flow of information shown in FIG. 8 is based on the aspect of the task support system. Steps S10 to S13 in FIG. 8 are similar to steps shown in FIG. 4, respectively, and the subsequent process (step S21 and the subsequent steps in FIG. 8) is a process related to the user's task support, and is performed in parallel with step S14 and the subsequent steps shown in FIG. 4. Here, the process in steps S21 to S23 relates to the calculation process of the needed time by the calculation unit 4023 (corresponding to the process in step S103 in FIG. 7). Specifically, in step S21, a request for information on a travel route included in the operation plan is issued from the center server 400 to the vehicle 100, and in response to the request, in step S22, the corresponding information is provided from the vehicle 100 to the center server 400. In step S23, the calculation unit 4023 calculates the needed time using the travel route information. Thereafter, in step S24, a request for remaining task information regarding the user who requests use of the vehicle 100 is transmitted from the center server 400 to the task management server 500. In response to the request, remaining task information is provided from the task management server 500 in step S25. The processes in steps S24 and S25 correspond to the process by the acquisition unit 4024 in step S104 in FIG. 7. Then, in step S26, a predetermined task is extracted from the provided remaining task information (corresponding to the process by the proposing unit 4025 in step S105 in FIG. 7).

Thereafter, in step S27, a proposal process of the predetermined task is performed from the center server 400 to the information processing apparatus 150 of the vehicle 100 (corresponding to the process by the proposing unit 4025 in step S106 in FIG. 7). When the above-described proposal is accepted by the user's operation on the information processing apparatus 150, the acceptance signal is sent from the vehicle 100 to the center server 400 (step S28). Based on the acceptance by the user, in step S29, the center server 400 instructs the information processing apparatus 150 of the vehicle 100 to form a task-possible state (corresponding to the process by the formation unit 4026 in step S107 of FIG. 7). As a result, in the vehicle 100, a task-possible state is formed in the information processing apparatus 150 (step S30).

As described above, by performing the task support control shown in FIG. 7, when the user uses the vehicle 100, it is possible to propose to the user, the remaining task that can be suitably completed during the movement of the vehicle. Therefore, the user can efficiently perform and complete the remaining task of the user in the autonomously traveling vehicle. The user gets on the vehicle 100 when the user makes a request for use and the vehicle 100 reaches the departure, and when getting on the vehicle 100, the user receives the proposal, and the task of the user can be started as soon as the proposal is accepted. The above described fact contributes to the efficient use of the moving time by the vehicle 100. The electronic file relating to the predetermined task completed by the information processing apparatus 150 during the movement of the vehicle 100 is not particularly limited, but it is desirable that the electronic file is transferred to the task management server 500 side upon completion and erased from the information processing apparatus 150.

### Modification Example 1

Regarding the proposal to the user of the predetermined task in the step S106, in the first embodiment, the proposing unit 4025 transmits the proposal information to the information processing apparatus 150 of the vehicle 100 and displays it on the display of the information processing apparatus 150, but instead of the aspect, in Modification Example 1, the proposal information is displayed on the user terminal 50 that is an information processing apparatus accessible by the user. That is, when the user issues a request for use and the vehicle 100 to be dispatched is decided, the vehicle 100 is directed toward the origin (that is, departure) of the user, but when the proposal information is generated before the vehicle 100 reaches the departure, the proposing unit 4025 can also transmit the proposal information to the user terminal 50. In this case, before the user gets on the vehicle 100, the user can accept a proposal of the predetermined task by the proposing unit 4025 and can answer whether the proposal is acceptable or not. In a case where the response of the user is to accept the proposal (affirmative determination in step S107 in FIG. 7), the formation unit 4026 can immediately cause the information processing apparatus 150 of the vehicle 100 to form a task-possible state. That is, since the task-possible state is formed before the user gets on the vehicle 100, when the user gets on the vehicle 100 at the departure, the user can immediately start the execution of the predetermined task. The transmission destination of the proposal information may be a portable terminal that the user personally owns in addition to the user terminal.

### Modification Example 2

Regarding the extraction process of the predetermined task in step S105, in the first embodiment, the proposing unit 4025 sets the condition 2, determines whether or not the electronic file used by the information processing apparatus 150 in the user's task can be processed, that is, makes a determination based on information on the needed environment of the remaining task, and then, extracts a predetermined task. However, when all of the information processing apparatuses 150 provided in the vehicle 100 is capable of processing all of the electronic files used in the user's task, in the extraction process of the predetermined task, the predetermined task may be extracted according to the condition 1. That is, the proposing unit 4025 can extract the predetermined task based on the comparison result between the calculated needed time, shown in condition 1, and the task load of the remaining task, while omitting condition 2.

### Modification Example 3

In Modification Example 3, a case is considered where a request for use from the user includes, in addition to the information on the departure and the destination, information on the relay place (a place where the vehicle 100 stops and the user temporarily gets off the vehicle 100) (for example, position information of the relay place and getting off time at the relay place). In the case as described above, the center server 400 receiving the request for use sends the operation command to the vehicle 100 by including the information on the relay place in the operation command, and the vehicle 100 sets a travel route from the departure to the destination including the designated relay place, in the operation plan. For example, in the example shown in FIG. 5, a travel route from the node B to the node D passing through the node C that is the relay place is set. In the relay place, it is assumed that the user temporarily gets off the vehicle 100 and performs the predetermined task outside the vehicle, and during that time, the vehicle 100 stops at the relay place.

In the case as described above, the calculation unit 4023 calculates the needed time in a manner not including the getting-off time of the user at the node C that is the relay place. The predetermined task is extracted by the proposing unit 4025, by using the calculated needed time as described above. As an alternative method, when the user temporarily gets off at a relay place, the task performance in the vehicle 100 is temporarily interrupted, so that the travel route is divided into a plurality of sections (a section from the node B to the node C and a section from the node C to the node D) at the relay place, the calculation unit 4023 may calculate the needed time for each of the divided sections and extract the remaining task that can be performed in each divided section as the predetermined task. In the example shown in FIG. 5, the proposing unit 4025 proposes two predetermined tasks, that is, a predetermined task performed in the section from the node B to the node C and a predetermined task performed in the section from the node C to the node D.

### Second Embodiment

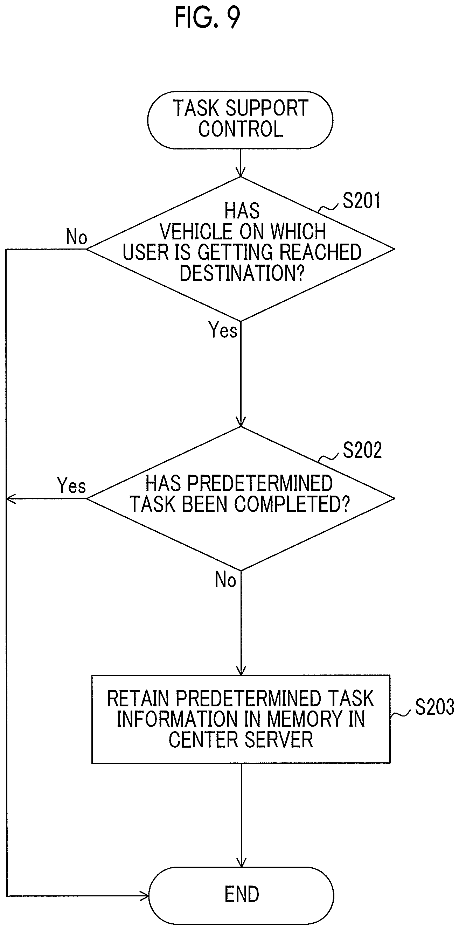

Based on FIG. 9, the task support control of a second embodiment will be described. The task support control shown in FIG. 9 is performed repeatedly at predetermined intervals in the center server 400, separately from the task support control shown in FIG. 7. Firstly, in step S201, the determination is made whether or not the vehicle 100 on which the user is getting has reached the destination. As described above, the current position information of the vehicle 100 is sent to the center server 400 at predetermined time intervals (process of step S10 in FIG. 8). Therefore, based on the current position information, the determination is made whether or not the vehicle 100 has reached the destination. When an affirmative determination is made in step S201, the process proceeds to step S202, whereas when a negative determination is made in step S201, the present control is terminated.

Next, when the user is performing the proposed a predetermined task in the vehicle 100, the determination is made in step S202 whether or not the predetermined task has been completed. The user can access the task management server 500 from the information processing apparatus 150 of the vehicle 100 through the center server 400. When the predetermined task is completed in the vehicle 100, the user accesses the task management DB 503 of the task management server 500, and changes the value of the completion flag field of the task management information corresponding to the predetermined task as "incomplete" to "complete". Therefore, in step S202, it is possible to determine completion of the predetermined task based on the input value of the completion flag field of the task management information corresponding to the proposed a predetermined task. When an affirmative determination is made in step S202, the present control is terminated, whereas when a negative determination is made in step S202, the process proceeds to step S203.

Here, in step S203, based on the fact that the proposed a predetermined task is in an incomplete state, the information retaining unit 4027 retains predetermined task information related to the predetermined task, in which the latest execution situation of the predetermined task in the incomplete state is reflected, in a memory (a storage unit: not shown) in the center server 400. Specifically, the latest electronic file itself related to the predetermined task, that has been updated at any time depending on the task performance of the user in the vehicle 100 is retained as predetermined task information. When retaining the predetermined task information, the information retaining unit 4027 acquires the latest electronic file retained in the information processing apparatus 150 of the vehicle 100 from the vehicle 100, and retains the above-described acquired electronic file in the center server 400.

Regarding the retaining of the predetermined task information, the information retaining unit 4027 retains the predetermined task information such that the user terminal 60, that can be used by the user at the destination after the user has reached the destination, can access and process the predetermined task information in the center server 400. Specifically, when predetermined task information is retained, the access right of the user terminal 60 with respect to a predetermined folder in the center server 400 where the predetermined task information is retained is set. It is possible to realize the setting of the access right of the user terminal 60 as described above, by providing information for identifying the user terminal 60 to the center server 400 in addition to the information on the departure and the destination when the user makes a request for use.

Since the task support control shown in FIG. 9 is performed as described above, even when the user is not able to temporarily complete the proposed a predetermined task in the moving vehicle 100, the user accesses predetermined task information through the user terminal 60 at the arrival destination, so it is possible to further continue the execution of the predetermined task and aim for the completion of the predetermined task. It is desirable that the electronic file relating to the predetermined task completed in the user terminal 60 is transferred to the task management server 500 side upon completion and erased from the user terminal 60.

### Other embodiments

The task support system described above may be provided in the vehicle 100. In this case, the calculation unit 4023 and the like are formed in the vehicle 100. The vehicle 100 receiving the operation command from the center server 400 generates the operation plan by the operation plan generation unit 1031 and performs the task support control for the task support of the user. At this time, since the operation plan is generated in the vehicle 100, the calculation process of the needed time by the calculation unit 4023 is completed in the vehicle 100. On the other hand, the acquisition unit 4024 accesses the task management server 500 through the center server 400 and acquires the remaining task information. The proposing unit 4025 may propose a predetermined task to the information processing apparatus 150 of the vehicle 100 or may propose a predetermined task to the user terminal 50 through the center server 400. The formation unit 4026 forms a task-possible state in the information processing apparatus 150 of the vehicle 100. The information retaining unit 4027 may retain predetermined task information related to the predetermined task that is in an incomplete state in a storage unit (not shown) in the vehicle 100, but preferably may retain the predetermined task information in the center server 400 in consideration of access from the user terminal 60.

As an alternative method, the task support system described above may be configured to straddle the vehicle 100 and the center server 400. In this case, the respective constituent elements such as the calculation unit 4023 are disposed in one of the vehicle 100 and the center server 400, and the respective constituent elements cooperate appropriately so as to realize the support process of task performance of the user suitably.

As an alternative method, the vehicle 100 may not be a vehicle that performs autonomous traveling, but may be a vehicle that is manipulated by a driver other than the user who makes a request for use.

### Recording media

A program for realizing the task support control in a computer or other machine or apparatus (hereinafter simply referred to as "computer or the like") can be recorded in a recording medium readable by a computer or the like. By causing a computer or the like to read and perform the program in the recording medium, the computer functions as the center server 400.

Here, the recording medium readable by a computer or the like refers to a non-transitory recording medium that can accumulate information such as data and programs by electrical, magnetic, optical, mechanical, or chemical action and can be read by a computer or the like. Among the recording media as described above, examples of removable media from a computer or the like include, for example, a flexible disk, a magneto-optical disk, a compact disc read only memory (CD-ROM), a compact disc-rewritable (CD-R/W), a DVD, a Blu-ray disc, a digital audio tape (DAT), an 8 mm tape, a memory card such as a flash memory, and the like. Examples of a recording medium fixed to a computer or the like include a hard disk, a ROM (read only memory), and the like. A solid state drive (SSD) can be used as a removable recording medium from a computer or the like, or as a recording medium fixed to a computer or the like.

## Claims

1. A task support system configured to support task performance of a user using an information processing apparatus (150) installed in a vehicle (100), the task support system comprising a server (500) including a task management database storing identification information for identifying the user and remaining task information on remaining tasks of the user in association with each other,
wherein the server (500) is configured to
calculate a needed time for the vehicle (100) to reach a predetermined destination set in association with the user,
acquire the remaining task information associated with the user from the task management database, based on the identification information for identifying the user, when the user gets on the vehicle (100),
extract a predetermined task predicted to be completed by the user through the information processing apparatus (150) within the needed time, from among remaining tasks included in the remaining task information, and
present the predetermined task extracted by the server (500) to a predetermined apparatus accessible by the user.

2. The task support system according to claim 1, wherein:
the server (500) is configured to obtain a signal indicating whether or not the user accepts the predetermined task presented by the server (500) from the predetermined apparatus; and
the server (500) is configured to control the information processing apparatus (150) so as to be in a task-possible state in which the user is permitted to access task information needed for the predetermined task through the information processing apparatus (150), when the user accepts the predetermined task.

3. The task support system according to claim 2, wherein:
the server (500) is configured to present information on the predetermined task to the predetermined apparatus that is different from the information processing apparatus (150) and is located in a location other than the vehicle (100); and
the server (500) is configured to control the information processing apparatus (150) so as to be in the task-possible state before the user gets on the vehicle (100), when the user accepts the predetermined task through the predetermined apparatus.

4. The task support system according to claim 2, wherein:
the server (500) is configured to present information on the predetermined task to the information processing apparatus (150) that is the predetermined apparatus; and
the server (500) is configured to control the information processing apparatus (150) so as to be in the task-possible state, when the user accepts the predetermined task through the information processing apparatus (150).

5. The task support system according to any one of claims 1 to 4, wherein:
the remaining task information includes information on a plurality of sub-tasks into which the remaining task is divided;
the server (500) is configured to extract, as the predetermined task, one of the sub-tasks that is predicted to be completed by the user through the information processing apparatus (150) within the needed time; and
the server (500) is configured to present the remaining task including the one of the sub-tasks as the predetermined task, to the predetermined apparatus accessible by the user.

6. The task support system according to any one of claims 1 to 4, wherein:
the remaining task information includes information on a priority of the remaining task; and
the server (500) is configured to, when there is a plurality of the remaining tasks predicted to be completed by the user through the information processing apparatus (150) within the needed time, extract the predetermined task based on priorities related to the remaining tasks.

7. The task support system according to claim 2, wherein:
the server (500) is configured to record predetermined information related to a task situation formed in the information processing apparatus (150) with respect to the predetermined task, in a case where the predetermined task is not completed when the vehicle (100) reaches the predetermined destination; and
the predetermined information is information determined to reproduce a situation identical to the task situation formed in the information processing apparatus (150) by being applied to another information processing apparatus (150) associated with the predetermined destination and accessible by the user.

8. The task support system according to any one of claims 1 to 7, wherein the vehicle (100) is an autonomous moving vehicle that is connected to the server through wireless communication and is configured to autonomously move to the predetermined destination, without manipulation by the user, in response to a moving command for the predetermined destination, the moving command being issued from the server (500).

9. A task support method for supporting task performance of a user using an information processing apparatus (150) installed in a vehicle (100), by using a server (500), the task support method comprising:
by the server (500), storing identification information for identifying the user and remaining task information on remaining tasks to be completed by the user in association with each other in a task management database of the server;
by the server (500), calculating a needed time for the vehicle (100) to reach a predetermined destination set in association with the user;
by the server (500), acquiring the remaining task information associated with the user, from the task management database, based on the identification information of the user, when the user gets on the vehicle (100);
by the server (500), extracting a predetermined task predicted to be completed by the user through the information processing apparatus (150) within the needed time, from among the remaining tasks included in the remaining task information associated with the user; and
by the server (500), presenting the predetermined task extracted by the server (500) to a predetermined apparatus accessible by the user.

10. The task support method according to claim 9, further comprising:
by the server (500), obtaining a signal indicating whether or not the user accepts the predetermined task presented by the server (500) from the predetermined apparatus; and
by the server (500), controlling the information processing apparatus (150) so as to be in a task-possible state in which the user is permitted to access task information needed for the predetermined task through the information processing apparatus (150), when the user accepts the predetermined task.
